# EUROPÄISCHE PATENTSCHRIFT

(11) **EP 1 243 470 B1**
(45) Veröffentlichungstag und Bekanntmachung des Hinweises auf die Patenterteilung: **01.02.2006**
(21) Anmeldenummer: 01107247.7
(22) Anmeldetag: 23.03.2001
(51) Int. Cl.: B60Q 3/02

(54) **Dachhimmelleuchte**
Vehicle headliner light
Eclairage de plafond pour véhicule

(43) Veröffentlichungstag der Anmeldung: 25.09.2002
(73) Patentinhaber: SIDLER GMBH & CO, D-72072 Tübingen (DE)
(72) Erfinder: Merz, Bernd, 72636 Frickenhausen (DE)
(74) Vertreter: Kohler Schmid Möbus

(56) Entgegenhaltungen:
- DE-U- 29 712 283
- FR-A- 2 747 971
- US-A- 2 156 621
- US-A- 2 269 795

## Beschreibung

Die Erfindung betrifft eine Dachhimmelleuchte zum Einbau in den Dachhimmel eines Fahrzeugs.

Leuchten, die im Dachhimmel eines Fahrzeugs befestigt sind, sind hinlänglich bekannt. Bei solchen bekannten Leuchten ist die Lichtquelle hinter einer Lichtscheibe angeordnet, wobei die Leuchte den Fahrzeuginnenraum beleuchtet. Für eine Ambientebeleuchtung ist eine Beleuchtung des Dachhimmels erwünscht, wobei eine Blendung des Fahrzeuginsassen durch die Lichtquelle ausgeschlossen sein soll.

Eine gattungsgemäße Dachhimmelleuchte ist aus der US-A-2 156 621 bekannt.

Es ist daher die Aufgabe der Erfindung, eine kostengünstige Dachhimmelleuchte bereitzustellen, mit welcher der Dachhimmel möglichst gleichmäßig ausgeleuchtet werden kann.

Diese Aufgabe wird erfindungsgemäß durch eine Dachhimmelleuchte mit den Merkmalen des Anspruchs 1 gelöst.

Der mit der Erfindung erzielte Vorteil bestehen darin, daß die Reflektorfläche aufgrund von Berechnungen bzw. Simulationen so gekrümmt gewählt werden kann, daß der Dachhimmel von der Lichtquelle gleichmäßig ausgeleuchtet wird. Außerdem sind mit Sockel, Reflektorkegel und Lichtscheibe sehr wenig Bauteile erforderlich, die alle aus Kunststoff und im Spritzgußverfahren kostengünstig hergestellt werden können.

Erfindungsgemäß ist die Lichtquelle von einem ringförmigen Blendenabschnitt des Sockels umgeben, um das von der Lichtquelle direkt in Richtung auf die Lichtscheibe abgestrahlte Licht auszublenden und so eine Blendung des Fahrzeuginsassen durch die Lichtquelle zu verhindern. Die Lichtquelle ist für den Fahrzeuginsassen durch den Reflektorkegel und den ringförmigen Blendenabschnitt verdeckt.

Bei besonders bevorzugten Ausführungsformen der Erfindung ist der Reflektorkegel mit einer Reflektorspitze ausgebildet und die Reflektorfläche entweder aus mehreren Reflektorkegelflächen zusammengesetzt oder in sich stufenlos gekrümmt.

Weitere Vorteile der Erfindung ergeben sich aus der Beschreibung und der Zeichnung. Die gezeigte und beschriebene Ausführungsform ist nicht als abschließende Aufzählung zu verstehen, sondern hat vielmehr beispielhaften Charakter für die Schilderung der Erfindung.

Es zeigt:
- Fig. 1: eine erfindungsgemäße Dachhimmelleuchte am Dachhimmel eines Kraftfahrzeugs im Längsschnitt; und
- Fig. 2: die Dachhimmelleuchte der Fig. 1 in einer Draufsicht.

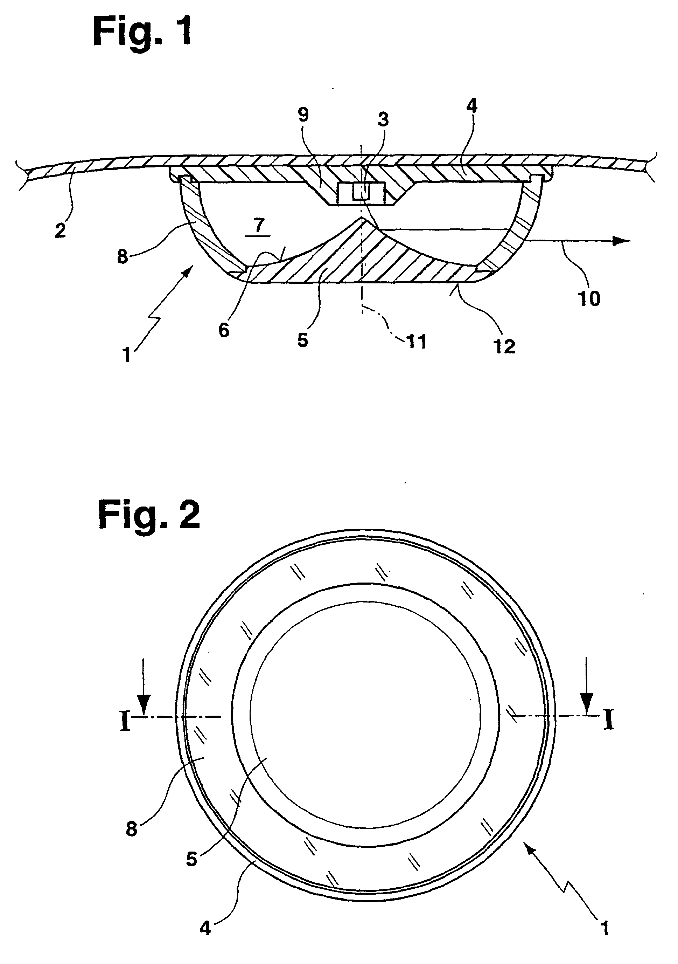

Die in den Fign. 1 und 2 insgesamt mit 1 bezeichnete Dachhimmelleuchte dient zum Beleuchten des nach innen in den Fahrzeuginnenraum gekrümmten Dachhimmels 2 eines Kraftfahrzeugs.

Die Dachhimmelleuchte 1 umfaßt einen eine Lichtquelle 3 tragenden Sockel 4, einen der Lichtquelle 3 mit seiner Reflektorspitze gegenüberliegenden Reflektorkegel 5, dessen Reflektorfläche 6 nach innen gewölbt ist, und eine den Leuchteninnenraum 7 zwischen Reflektorkegel 5 und Sockel 4 radial nach außen abschließende ringförmige glasklare Lichtscheibe 8, durch die das am Reflektorkegel 5 reflektierte Licht der Lichtquelle 3 in Richtung auf den Dachhimmel 2 austritt. Die Reflektorfläche 6 ist derart gekrümmt, daß der Dachhimmel 2 von der Lichtquelle 3 gleichmäßig ausgeleuchtet wird. Dazu kann die Reflektorfläche 6 stufenlos gekrümmt oder aus mehreren Reflektorkegelflächen zusammengesetzt sein.

Die Lichtquelle 3 ist von einem ringförmigen Blendenabschnitt 9 des Sockels 4 umgeben, der das von der Lichtquelle 3 direkt in Richtung auf die Lichtscheibe 8 abgestrahlte Licht ausblendet. Der Strahlengang des von der Lichtquelle 3 abgestrahlten und durch die Lichtscheibe 8 austretenden Lichts 10 ist schematisch dargestellt.

Die Dachhimmelleuchte 1 ist rotationssymmetrisch zur Achse 11 des Reflektorkegels 5 und aufgrund der nach außen gekrümmten Lichtscheibe 8 und der flachen Oberseite 12 des Reflektorkegels 4 kugelschichtförmig ausgebildet.

## Patentansprüche

1. Dachhimmelleuchte (1) zum Einbau in den Dachhimmel (2) eines Fahrzeugs, umfassend:
einen eine Lichtquelle (3) tragenden Sockel (4), der am Dachhimmel (2) befestigbar ist,
einen der Lichtquelle (3) mit seinem spitzen Ende gegenüberliegenden Reflektor, dessen Reflektorfläche (6) nach innen gewölbt ist,
und eine den Leuchteninnenraum (7) zwischen Reflektor und Sockel (4) radial nach außen abschließende ringförmige Lichtscheibe (8), durch die das am Reflektor reflektierte Licht der Lichtquelle (3) in Richtung auf den Dachhimmel (2) austritt,
**dadurch gekennzeichnet,**
**dass** der Reflektor als Reflektorkegel (5) ausgebildet ist, zu dessen Achse die Dachhimmelleuchte (1) rotationssymmetrisch ist, und dass die Lichtquelle (3) von einem ringförmigen Blendenabschnitt (9) des Sockels (3) umgeben ist, der das von der Lichtquelle (3) direkt in Richtung auf die Lichtscheibe (8) abgestrahlte Licht ausblendet.

2. Dachhimmelleuchte nach Anspruch 1, **dadurch gekennzeichnet, daß** der Reflektorkegel (5) mit einer Reflektorspitze ausgebildet ist.

3. Dachhimmelleuchte nach Anspruch 1 oder 2, **dadurch gekennzeichnet, daß** die Reflektorfläche (6) aus mehreren Reflektorkegelflächen zusammengesetzt ist.

4. Dachhimmelleuchte nach Anspruch 1 oder 2, **dadurch gekennzeichnet, daß** die Reflektorfläche (6) in sich stufenlos gekrümmt ist.

5. Dachhimmelleuchte nach einem der vorhergehenden Ansprüche, **dadurch gekennzeichnet, daß** die Lichtscheibe (8) nach außen gekrümmt ist.

6. Dachhimmelleuchte nach einem der vorhergehenden Ansprüche, **dadurch gekennzeichnet, daß** die Dachhimmelleuchte (1) kugelschichtförmig ausgebildet ist.

## Claims

1. Headliner light (1) for installation in the headliner (2) of a vehicle, comprising:
a base (4) which carries a light source (3) and can be mounted to the headliner (2),
a reflector whose pointed end faces the light source (3), the reflector surface (6) being inwardly curved,
and an annular light disk (8) which radially closes the light interior (7) between reflector and base (4) to the outside, and through which the light from the light source (3) reflected on the reflector is emitted in the direction of the headliner (2),
**characterized in that** the reflector is designed as reflector cone (5), wherein the headliner light (1) is rotationally symmetric to the axis of the reflector cone, and the light source (3) is surrounded by an annular aperture section (9) of the base (4), which fades out the light emitted by the light source (3) directly in the direction of the light disk (8).

2. Headliner light according to claim 1, **characterized in that** the reflector cone (5) has a reflector tip.

3. Headliner light according to claim 1 or 2, **characterized in that** the reflector surface (6) is composed of several reflector cone surfaces.

4. Headliner light according to claim 1 or 2, **characterized in that** the reflector surface (6) is curved in itself without any step.

5. Headliner light according to any one of the preceding claims, **characterized in that** the light disk (8) is curved to the outside.

6. Headliner light according to any one of the preceding claims, **characterized in that** the headliner light (1) is designed as spherical segment of two bases.

## Revendications

1. Plafonnier ou feu d'éclairage de pavillon (1) destiné à être monté dans le pavillon (2) d'un véhicule, comprenant :
une embase (4) supportant une source de lumière (3) et pouvant être fixée sur le pavillon (2),
un réflecteur qui, avec son extrémité en pointe, est en regard de la source de lumière (3), et dont la surface de réflecteur (6) est courbée vers l'intérieur,
et une vitre d'éclairage (8) de forme annulaire, qui ferme radialement vers l'extérieur l'espace intérieur (7) du feu entre le réflecteur et l'embase (4), et à travers laquelle la lumière de la source de lumière (3), réfléchie sur le réflecteur, émerge en direction du pavillon (2),
**caractérisé en ce que** le réflecteur est réalisé sous forme de cône de réflecteur (5) par rapport à l'axe duquel le plafonnier (1) présente une symétrie de rotation, et **en ce que** la source de lumière (3) est entourée par un tronçon de masque (9) de forme annulaire de l'embase (4), qui masque la lumière rayonnée par la source de lumière (3) directement en direction de la vitre d'éclairage (8).

2. Plafonnier selon la revendication 1, **caractérisé en ce que** le cône de réflecteur (5) est réalisé avec une pointe ou un sommet de réflecteur.

3. Plafonnier selon la revendication 1 ou 2, **caractérisé en ce que** la surface de réflecteur (6) est formée par l'assemblage de plusieurs surfaces coniques de réflecteur.

4. Plafonnier selon la revendication 1 ou 2, **caractérisé en ce que** la surface de réflecteur (6) présente en soi une courbure continue.

5. Plafonnier selon l'une des revendications précédentes, **caractérisé en ce que** la vitre d'éclairage (8) est courbée vers l'extérieur.

6. Plafonnier selon l'une des revendications précédentes, **caractérisé en ce que** le plafonnier (1) est d'une configuration en forme de tronçon de sphère à deux bases ou de tranche de sphère.
